# EUROPÄISCHE PATENTSCHRIFT

(11) **EP 2 108 883 B1**
(45) Veröffentlichungstag und Bekanntmachung des Hinweises auf die Patenterteilung: **05.12.2018**
(21) Anmeldenummer: 09002730.1
(22) Anmeldetag: 26.02.2009
(51) Int. Cl.: F21W 103/20, F21W 103/35, F21Y 115/10, F21S 43/242, F21S 43/245, F21S 43/247

(54) **Signalleuchte für Kraftfahrzeuge**
Signal light for motor vehicles
Lampe de signalisation pour véhicules automobiles

(30) Priorität: 27.03.2008 DE 102008016174
(43) Veröffentlichungstag der Anmeldung: 14.10.2009
(73) Patentinhaber: HELLA GmbH & Co. KGaA, 59552 Lippstadt (DE)
(72) Erfinder: Mügge, Martin Dipl.-Ing., 59590 Geseke (DE)
(74) Vertreter: Ostermann, Thomas

(56) Entgegenhaltungen:
- EP-A2- 1 172 253
- EP-A2- 1 640 656
- DE-A1- 10 207 694
- DE-A1-102005 019 018

## Beschreibung

Die Erfindung betrifft eine Signalleuchte für Kraftfahrzeuge nach dem Oberbegriff des Patentanspruchs 1.

Aus der DE 102 07 694 A1 ist eine Signalleuchte für Kraftfahrzeuge bekannt, die zum einen eine erste Lichteinheit bestehend aus einem Reflektor und einer Lichtquelle und zum anderen eine zweite Lichteinheit bestehend aus einem flächigen Lichtleitelement und einer Lichtquelle aufweist. Das flächige Lichtleitelement ist in Hauptabstrahlrichtung vor der ersten Lichteinheit angeordnet und deckt diese vollständig ab. An einer Schmalseite des flächigen Lichtleitelementes ist eine Reihe von Leuchtdioden als Lichtquelle angeordnet, so dass das von denselben emittierte Licht an der Schmalseite des Lichtleitelementes eingekoppelt und dann an einer flächigen Vorderseite und einer zu derselben gegenüberliegenden flächigen Rückseite totalreflektiert wird. An der flächigen Rückseite des Lichtleitelementes sind als Auskoppelmittel Auskoppelelemente angeordnet, so dass das eingespeiste Licht in Richtung der Vorderseite des Lichtleitelementes abgelenkt und an derselben ausgekoppelt wird. Die dem Reflektor zugeordnete Lichtquelle ist als eine Glühlampe ausgebildet, die unabhängig von den dem Lichtleitelement zugeordneten Leuchtdioden ein- und abschaltbar ist. Zur Bildung einer gemeinsamen Lichtfunktion kann die erste Lichteinheit und die zweite Lichteinheit gleichzeitig betrieben werden. Dadurch, dass die Fläche und/oder die Anzahl der Auskoppelelemente ausgehend von der als Lichteinkoppelfläche dienenden Schmalseite des Lichtleitelementes kontinuierlich zunimmt, kann über die Fläche des als "Lichtvorhang" wirkenden Lichtleitelementes eine homogene Lichtabstrahlung erfolgen, die zur Erzeugung beispielsweise der Schlusslichtfunktion genutzt werden kann. Da das flächige Lichtleitelement gemäß der bekannten Signalleuchte stets in Hauptabstrahlrichtung vor dem Reflektor der ersten Lichteinheit angeordnet ist, ist die Lichtverteilung der Signalleuchte auf einen Vorderbereich beschränkt, so dass die Erzeugung einer Seitenmarkierungsfunktion nicht gegeben ist.

Aufgabe der vorliegenden Erfindung ist es, eine Signalleuchte für Kraftfahrzeuge derart weiterzubilden, dass auf Platz sparende Weise Grundlichtfunktionen der Signalleuchte, wie beispielsweise Schlusslicht-, Bremslicht- und/oder Blinklichtfunktion, um eine Seitenmarkierungslichtfunktion ergänzt werden, wobei insbesondere gesetzliche Vorgaben eingehalten werden.

Zur Lösung dieser Aufgabe weist die Erfindung die Merkmale des Patentanspruchs 1 auf.

Vorteilhaft ermöglicht die Erfindung eine relativ große leuchtende und zusammenhängende Fläche, die nach Art eines "Lichtvorhangs" sich in einem Heckbereich eines Kraftfahrzeugs entlang eines spitzen Winkels, beispielsweise in einem Winkelbereich von 50° bis 70° um eine Karosserieecke erstrecken kann. Hierbei erstreckt sich der "Lichtvorhang" bis in einen Seitenbereich der Leuchte, der über die Karosserieecke des Fahrzeugs hinüberreicht, und ist in einen Ausschnitt einer Seitenwandung der Karosserie, die im Wesentlichen parallel zu einer vertikalen Fahrzeuglängsmittelebene verläuft, angeordnet. Erfindungsgemäß wird die Grundlichtfunktion, wie beispielsweise die Schlusslichtfunktion, um eine Seitenmarkierungsfunktion erweitert, wobei allein durch Ausgestaltung des flächigen Lichtleitelementes die gesetzlichen Vorgaben hinsichtlich der Lichtstärkeverteilung eingehalten werden können. Dem flächigen Lichtleitelement sind hierzu Auskoppelmittel zugeordnet, so dass in einem vorderen Teil eines äußeren Abschnitts des Lichtleitelementes und in einem endseitigen hinteren Teil desselben Abschnittes entsprechende Lichtbündelanteile abgestrahlt werden, die die vorgegebenen Schwellwertbedingungen einhalten. Vorteilhaft kann ein homogener Gesamteindruck des "Lichtvorhangs" erzielt werden, obwohl durch Auslegung der Auskoppelmittel entlang des Lichtleitelementes Leuchtdichtesprünge vorkommen. Denn der Betrachter erfasst die Leuchtdichte des Lichtvorhangs durch physiologisches "logarithmische Sehen" insgesamt und nimmt die Leuchtdichteunterschiede daher nicht so stark wahr.

Nach der Erfindung sind die Auskoppelmittels als Licht streuende Auskoppelelemente ausgebildet, die an einer Vorderseite und/oder an einer Rückseite des flächigen Lichtleitelementes so angeordnet sind, dass die Lichtstärke im Vorderbereich der Leuchte relativ groß und in einem Seitenbereich der Leuchte relativ klein ist. Hierzu steigt die Anzahl und/oder die Größe der Auskoppelelemente ausgehend von der Lichteinkoppelfläche des Lichtleitelementes in Richtung des äußeren Abschnittes an, während die Anzahl und/oder Größe der Auskoppelelemente im äußeren Abschnitt konstant ist oder abnimmt. Vorteilhaft kann durch Auslegung der Auskoppelelemente an dem Lichtleitelement eine gewünschte Lichtverteilung nach vorne und zur Seite gewährleistet sein.

Nach einer Weiterbildung der Erfindung können die Auskoppelelemente als Bedruckungsflächen oder als kugelförmige oder prismenförmige Buchtungen ausgebildet sein. Beispielsweise können die Bedruckungsflächen als Punktdruckflächen ausgebildet sein. Vorteilhaft kann hierdurch die gewünschte Lichtverteilung nach Herstellung des Lichtleitelementes in Abhängigkeit von den Vorgaben erstellt werden.

Nach einer bevorzugten Ausführungsform der Erfindung ist ein erster Schwellwert ein Seitenmarkierungslichtschwellwert, der die Mindestlichtstärke des abgestrahlten Lichtbündelanteils für die Erzeugung einer Seitenmarkierungslichtfunktion in einem vorgegebenen Winkelbereich vorgibt. Vorteilhaft kann hierdurch unter Ausnutzung einer gesetzlich zulässigen Seitenmarkierungslichtfunktion die leuchtende Fläche vergrößert werden, wobei diese von einer Heckfläche des Fahrzeugs über den Eckbereich in eine Seitenfläche des Fahrzeugs homogen übergehen kann.

Nach einer Weiterbildung der Erfindung ist das flächige Lichtleitelement durch eine rot eingefärbte Abdeckscheibe abgedeckt, die vorzugsweise randseitig an dem Gehäuse der Signalleuchte befestigt ist. Die Abdeckscheibe erstreckt sich vorzugsweise einstückig in dem Vorderbereich und dem Seitenbereich der Signalleuchte und gibt die Konturierung des Fahrzeuges im eckseitigen Heckbereich vor. Sie kann aus stilistischen Gründen eine beliebige Form aufweisen. Die Lichtverteilung in dem eckseitigen Heckbereich (Vorderbereich, Seitenbereich) wird maßgeblich durch das flächige Lichtleitelement bestimmt.

Nach einer Weiterbildung der Erfindung sind die Auskoppelmittel derart angeordnet, dass ein Lichtbündelanteil unter einem in Fahrtrichtung nach vorne weisenden Winkelbereich mit einer Lichtstärke unterhalb eines vorgegebenen Lichtstärkeschwellwertes abgestrahlt wird, so dass nur ein relativ kleiner roter sichtbarer Lichtanteil der Signalleuchte nach vorne hin erkennbar ist.

Die gesetzlichen Vorgaben für die Erzeugung einer Schlusslichtfunktion mit seitlicher Lichtabstrahlung sind daher erfüllt.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine Vorderansicht einer Signalleuchte,
- Figur 2: einen Horizontalschnitt durch die Signalleuchte mit Darstellung der Lichtstärkeverteilung entlang eines flächigen Lichtleitelementes,
- Figur 3: ein vergrößerter Horizontalschnitt durch die Signalleuchte mit Angabe der Winkelbereiche, in denen die Einhaltung von Lichtstärkewerten bezüglich eines Schwellwertes vorgesehen ist,
- Figur 4: eine Lichtstärkeverteilung des flächigen Lichtleitelementes in horizontaler Richtung, wobei ein Horizontalwinkel 0° quer zur Längsmittelachse des Fahrzeugs orientiert angeordnet ist, und
- Figur 5: einen Horizontalschnitt durch die Signalleuchte mit einem flächigen Lichtleitelement nach einer alternativen Ausführungsform.

Eine Signalleuchte für Fahrzeuge ist als Heckleuchte ausgebildet, die in einer eckseitigen Ausnehmung einer Karosserie des Kraftfahrzeuges angeordnet ist. Die Signalleute weist ein Gehäuse 1 auf, in dem eine Mehrzahl von Lichteinheiten 2 angeordnet ist. Innerhalb des Gehäuses 1 ist ein in horizontaler Richtung mittlerer scherbenförmiger Reflektor 3 angeordnet, an dem sich auf einer der Fahrzeuglängsachse zugewandten inneren Seite ein innerer Reflektor 4 und an dem sich auf einer gegenüberliegenden, der Fahrzeuglängsachse abgewandten äußeren Seite ein äußerer Reflektor 5 anschließen. Der mittlere Reflektor 3, der innere Reflektor 4 und der äußere Reflektor 5 sind von einem flächigen Lichtleitelement 6 abgedeckt, das sich in Hauptabstrahlrichtung 7 der Signalleuchte vor den Reflektoren 3, 4, 5 erstreckt. In Hauptabstrahlrichtung 7 vor dem flächigen Lichtleitelement 6 ist eine rot eingefärbte Abdeckscheibe 8 vorgesehen, die randseitig an dem Gehäuse 1 befestigt ist.

Die Signalleuchte dient zur Erzeugung einer Schluss-, Blinklicht-, Bremslicht- und Seitenmarkierungslichtfunktion. Die Lichteinheiten 2 bestehen jeweils aus einer Anzahl von Leuchtdioden als Lichtquellen und denselben zugeordneten optischen Mitteln.

Die Blinklicht-Lichteinheit 2 ist gebildet aus einer mit einer Mehrzahl von Leuchtdioden bestückten Leiterplatte 9 und dem mittleren Reflektor 3. Der mittlere Reflektor 3 weist im vorliegenden Ausführungsbeispiel neun Reflektorsegmente auf, die sich im Wesentlichen in vertikaler Richtung zu einem Reflektorstreifen erstrecken. Die Leiterplatte 9 ist in dem Gehäuse in vertikaler Richtung und seitlich zu dem mittleren Reflektor 3 positioniert. In Hauptabstrahlrichtung 7 vor dem mittleren Reflektor 3 ist eine verspiegelte Optikscheibe 10 vorgesehen, die sich zwischen einem vorderen Rand des mittleren Reflektors 3 und dem flächigen Lichtleitelement 6 erstreckt. Die verspiegelte Optikscheibe 10 verhindert, dass von außen der Aufbau der Leiterplatte 9 sichtbar ist.

Zur Bildung der Schluss-/Bremslichtfunktion sind zwei voneinander beabstandete Lichteinheiten 2' vorgesehen, wobei die eine Lichteinheit 2' dem inneren Reflektor 4 und eine demselben zugeordnete erste Leiterplatte 11 einerseits und die andere Lichteinheit 2' dem äußeren Reflektor 5 und einem demselben zugeordneten zweiten Leiterplatte 12 aufweist. Die Leiterplatten 11, 12 erstrecken sich jeweils in vertikaler Richtung, Im vorliegenden Ausführungsbeispiel ist die zweite Leiterplatte 12 einstückig mit der Leiterplatte 9 verbunden, wobei auf einer dem inneren Reflektor 4 zugewandten Seite gelbe Leuchtdioden und auf einer dem äußeren Reflektor 5 zugewandten Seite rote Leuchtdioden angeordnet sind. Die erste Leiterplatte 11 ist - wie die zweite Leiterplatte 12 - mit roten Leuchtdioden bestückt.

Die vorgenannten Lichteinheiten zur Bildung der Blinklichtfunktion und/oder der Schlusslicht-/Bremslichtfunktion bilden eine erste Lichteinheit 2', denen jeweils als zweite Lichteinheit 2" das flächige Lichtleitelement 6 vorgelagert ist. Die zweite Lichteinheit 2" wird somit aus dem flächigen Lichtleitelement 6 und einer mit Leuchtdioden 13' bestückten Leiterplatte 13 gebildet. Die dritte Leiterplatte 13 erstreckt sich parallel zu der ersten Leiterplatte 11 und der zweiten Leiterplatte 12. Die dritte Leiterplatte 13 ist im Bereich einer Schmalseite 14 (Lichteinkoppelfläche) des Lichtleitelementes 6 angeordnet, so dass das von den Leuchtdioden 13' abgestrahlte Licht in die Schmalseite 14 des Lichtleitelementes 6 eingekoppelt und an einer flächigen Vorderseite 16 und einer flächigen Rückseite 17 desselben totalreflektiert wird. An der flächigen Rückseite 17 sind eine Mehrzahl von nicht dargestellten Auskoppelelementen (Auskoppelmittel) angeordnet, so dass das eingekoppelte Licht an der flächigen Vorderseite 16 ausgekoppelt wird.

Die Auskoppelelemente können durch Bedrucken oder durch Laserstrukturierung oder durch Erodierung oder durch Ätzung aufgebracht sein, wie es aus der DE 10 2005 018 212 A1 bekannt ist. Beispielsweise können die Auskoppelelemente als Bedruckungsflächen in Punktform ausgebildet sein. Alternativ können die Auskoppelelemente auch als kugelförmige oder prismenförmige Oberflächenabschnitte (Buchtungen) ausgebildet sein, so dass diese beim Spritzgießen des Lichtleitelementes 6 hergestellt werden können. Alternativ können die Auskoppelelemente auch an der Vorderseite 16 angeordnet sein. Wesentlich ist, dass mittels der Auskoppelelemente eine über die Fläche des Lichtleitelementes 6 verteilte Lichtabstrahlung ermöglicht wird, so dass das Lichtleitelement 6 quasi als ein "Lichtvorhang" dient.

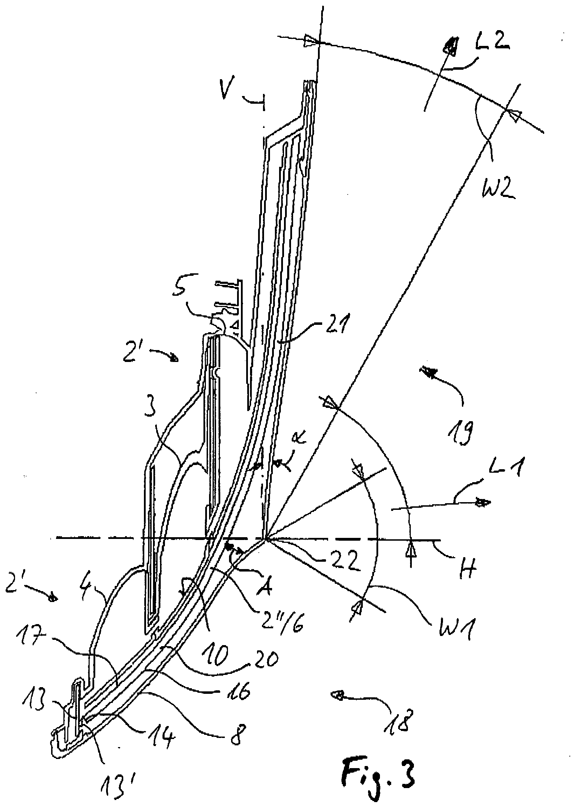

Wie aus Figur 3 ersichtlich ist, erstrecken sich das Lichtleitelement 6 und die Abdeckscheibe 8 nicht nur in einem in Hauptabstrahlrichtung 7 vor den ersten Lichteinheiten 2' angeordneten Vorderbereich 18, sondern auch in einem quer zu den ersten Lichteinheiten 2' angeordneten Seitenbereich 19 der Signalleuchte. Das im Horizontalschnitt bogenförmig verlaufende Lichtleitelement 6 weist einen im Vorderbereich 18 verlaufenden inneren Abschnitt 20 sowie einen sich an denselben anschließenden äußeren Abschnitt 21 auf, der sich im Wesentlichen in dem Seitenbereich 19 erstreckt. Wie aus Figur 3 ersichtlich ist, erstreckt sich ein äußerer Abschnitt der Abdeckscheibe 8 in dem Seitenbereich 19, die zugleich die Kontur der Signalleuchte bildet, im Wesentlichen parallel zu der Hauptabstrahlrichtung 7. Beispielsweise kann der äußere Abschnitt der Abdeckscheibe 8 in dem Seitenbereich 19 der Signalleuchte in einem Winkelbereich α von 0° und 15° bezogen auf eine in Hauptabstrahlrichtung 7 orientierte Vertikalebene V verlaufen. Der äußere Abschnitt der Abdeckscheibe 8, der zu dem äußeren Abschnitt 21 des Lichtleitelementes 6 korrespondiert, erstreckt sich somit in Hauptabstrahlrichtung 7 neben den ersten Lichteinheiten 2'.

Die Abdeckscheibe 8 erstreckt sich in einem Abstand A zu dem flächenhaften Lichtleitelement 6, wobei der größte Abstand gebildet wird in einem Bereich zwischen dem inneren Abschnitt 20 und dem äußeren Abschnitt 21 des Lichtleitelementes 6 bzw. der Abdeckscheibe 8. Die Abdeckscheibe 8 weist in diesem Bereich eine unstetigkeitsstelle 22 auf, durch die eine gedachte Horizontale H verläuft, die maßgeblich ist für die Ausgestaltung der Auskoppelelemente im Bezug auf die seitliche Lichtabstrahlung der Signalleuchte. Die Horizontale H erstreckt sich in seitlicher Richtung und steht senkrecht zu der Vertikalebene V bzw. der Hauptabstrahlrichtung 7. Dieser Abstand A zwischen der Abdeckscheibe 8 und dem Lichtleitelement 6 kann in horizontaler und/oder vertikaler Erstreckungsebene veränderlich ausgebildet sein.

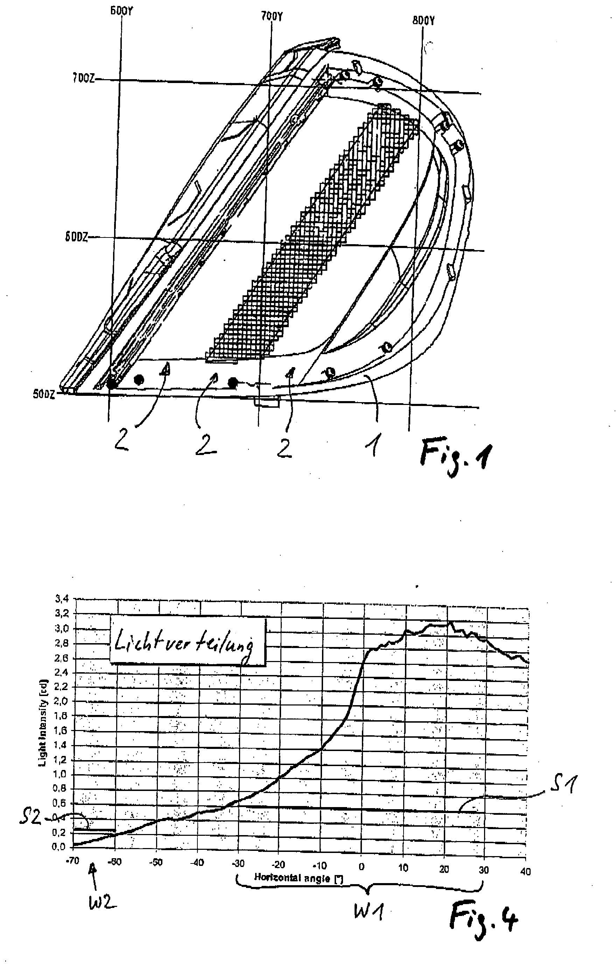

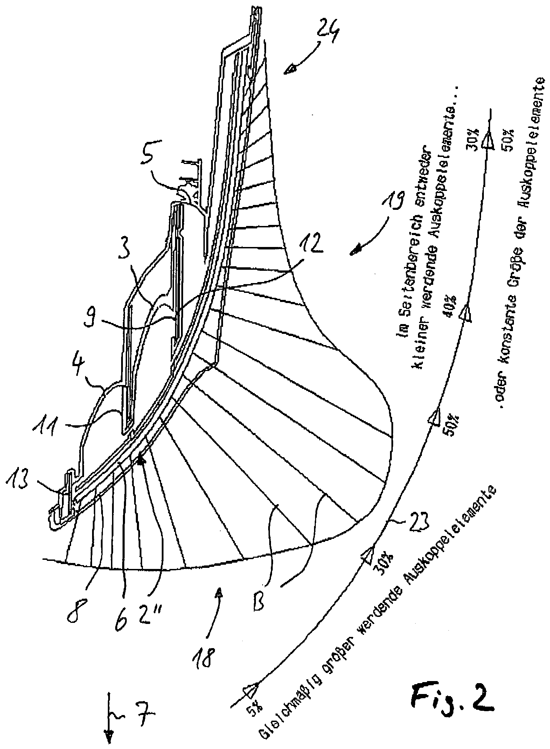

Damit ein homogen erscheinender Gesamteindruck der abstrahlenden Leuchtfläche von dem Vorderbereich 18 bis in den Seitenbereich 19 gegeben ist, ist die Größe und/oder die Anzahl der Auskoppelelemente ausgehend von der Lichteinkoppelfläche 14 entlang des inneren Abschnittes 20 in Richtung des äußeren Abschnittes 21 derart gewählt, dass eine Lichtstärkeverteilung gemäß Figur 4 erzeugt wird. In Figur 2 ist ebenfalls eine Lichtstärkeverteilung des Lichtleitelementes 6 dargestellt, wobei die Länge der Linien B zu der Höhe der in diesem Bereich in Richtung einer Flächennormalen des Lichtleitelementes 6 abgestrahlten Lichtstärke korrespondiert. Durch eine in Pfeilrichtung 23 größer werdende Ausbildung der Auskoppelelemente steigt die Lichtstärke ausgehend von der Lichteinkoppelfläche 14 an, bis ein horizontaler Winkel von +20° erreicht ist. wie besser aus Figur 4 zu ersehen ist, sinkt dann die Lichtstärke insbesondere in einem Winkelbereich von 0° bis - 30°, bis sie nach und nach in einem endseitigen hinteren Teil 24 des äußeren Abschnitts 21 einen wert von weniger als 0,1 cd einnimmt. Die Verringerung der Lichtstärke wird durch Konstanthalten der Größe bzw. Anzahl der Auskoppelelemente oder durch Verringerung der Größe der Auskoppelelemente in Richtung des endseitigen hinteren Teils 24 des äußeren Abschnitts 20 innerhalb das Seitenbereich 19 erreicht.

Wie aus Figur 4 ersichtlich ist, sind die Auskoppelelemente derart angeordnet, dass die Signalleuchte in einem Winkelbereich W1 von +/- 30° bezogen auf die Horizontalen H oberhalb eines ersten Schwellwertes S1 und in einem Winkelbereich W2 in einem Bereich von weniger als -60° bezogen auf die Horizontallinie H ein zweiter Schwellwert S2 unterschritten ist.

Der erste Schwellwert S1 bildet einen Seitenmarkierungslichtschwellwert, der die Mindestlichtstärke des in dem Winkelbereich W1 abzustrahlenden ersten Lichtbündelanteils L1 vorgibt. Der erste Schwellwert S1 kann beispielsweise 0,6 cd betragen. Hierdurch wird gewährleistet, dass bei Betrieb der Schlusslicht-/Bremslichtfunktion zugleich eine Seitenmarkierungslichtfunktion erzeugt wird, wobei die für die Seitenmarkierungslichtfunktion erforderlichen Mindestlichtwerte erreicht werden. Wie aus Figur 3 ersichtlich ist, sind die Auskoppelelemente zur Erfüllung dieser Vorgabe in einem zueinander gekehrten Endbereich des inneren Abschnitts 20 und des äußeren Abschnitts 21 des Lichtleitelementes 6 angeordnet.

Der zweite Winkelbereich W2 überstreicht einen Winkel von 30°. In diesem zur Vorderseite des Fahrzeugs weisenden winkelbereich ist die Lichtstärke der Signalleuchte unterhalb des zweiten Schwellwertes S2 von 0,25 cd. Der in diesem Winkelbereich W2 abgestrahlte Lichtbündelanteil L2 kann somit so niedrig gehalten werden, dass eine für die Schlusslichtfunktion zulässige rote Leuchtwirkung nach vorne gewährleistet ist.

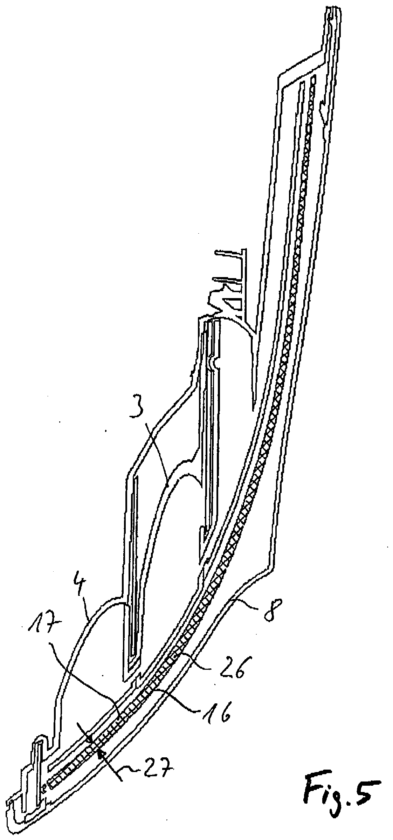

Nach einer alternativen Ausführungsform der Signalleuchte gemäß Figur 5 kann im Unterschied zu dem vorhergehenden Ausführungsbeispiel ein Lichtleitelement 26 vorgesehen sein, das durch variierung einer Wandstärke 27 desselben den in Figur 4 dargestellten Lichtstärkeverlauf bewirkt. Die weiteren Bauteile bzw. Bauteilfunktionen der Signalleuchte gemäß Figur 5 stimmen mit der Signalleuchte gemäß den Figuren 1 bis 3 überein. Gleiche Bauteile bzw. Bauteilfunktionen haben somit die gleichen Bezugsziffern.

Als Auskoppelmittel dient somit die Wandstärkeveränderung des Lichtleitelementes 26, wobei ausgehend von der Lichteinkoppelfläche 14 die Wandstärke 27 kontinuierlich verringert wird. Im Bereich der Lichteinkoppelfläche 14 weist das Lichtleitelement 26 eine Wandstärke 27 von mehr als 3 mm auf, um eine optimale Lichteinkopplung zu gewährleisten. Durch die in Richtung des gegenüberliegenden Endes des Lichtleitelementes 26 erfolgte Reduzierung der Wandstärke 27 wird die Anzahl der Totalreflexionen innerhalb des Lichtleiters 26 erfüllt, da die Weglängen der Lichtstrahlen zwischen der Vorderseite 16 und der Rückseite 17 immer kürzer wird. Bei Erhöhung der Anzahl der Totalreflexionen erfolgt ein erhöhter Lichtauskopplungsgrad.

In den vorliegenden Ausführungsbeispielen wird die Bremslichtfunktion durch eine im vergleich zur Bremslichtfunktion erhöhte Bestromung der dem inneren Reflektor 4 und dem äußeren Reflektor 5 zugeordneten Leuchtdioden bewirkt. Die dem Lichtleitelement 6 zugeordneten Leuchtdioden 13' sind sowohl im Betriebszustand des Schluss- als auch des Bremslichtes aktiviert. Zur Bildung der Seitenmarkierungslichtfunktion können die Leuchtdioden 13' der zweiten Lichteinheit 2" ausschließlich oder zusammen mit den Leuchtdioden der ersten Lichteinheit 2' aktiviert sein.

## Patentansprüche

1. Signalleuchte für Kraftfahrzeuge mit einem Gehäuse (1), in dem mindestens eine erste Lichteinheit und eine in Hauptabstrahlrichtung (7) vor derselben angeordnete zweite Lichteinheit vorgesehen sind, wobei die zweite Lichteinheit als ein flächiges Lichtleitelement (6, 26) ausgebildet ist, das die erste Lichteinheit abdeckt, dass das flächige Lichtleitelement eine der ersten Lichteinheit zugeordnete Rückseite (17), eine der ersten Lichteinheit abgewandte Vorderseite (16) und eine die Rückseite mit der Vorderseite verbindende Schmalseite (14) aufweist, der als Lichteinkoppelfläche mindestens eine Leuchtdiode als Lichtquelle zugeordnet ist zum Einkoppeln des Lichtes in das flächige Lichtleitelemente, und dass das flächige Lichtleitelement derart ausgebildet ist, dass durch die Vorderseite ein Lichtbündel vorgegebener Lichtstärkeverteilung abgestrahlt wird, **dadurch gekennzeichnet, dass** das flächige Lichtleitelement (6, 26) einen sich in einem Vorderbereich (18) der Signalleuchte erstreckenden inneren Abschnitt (20) aufweist und einen sich in einem Seitenbereich (19) der Signalleuchte erstreckenden äußeren Abschnitt (21) aufweist, wobei in dem Seitenbereich (19) eine Kontur der Signalleuchte im Wesentlichen parallel zu der Hauptabstrahlrichtung (7) verläuft, und dass dem flächigen Lichtleitelement Auskoppelmittel zugeordnet sind, derart, dass von dem flächigen Lichtleitelement (6, 26) in einem Teil des inneren Abschnitts (20) und/oder einem demselben zugewandten Teil des äußeren Abschnitts (21) des Lichtleitelementes (6, 26) ein Lichtbündelanteil (L1) ausgekoppelt wird, dessen Lichtstärke oberhalb eines vorgegebenen ersten Schwellwertes (S1) liegt, und dass von dem flächigen Lichtleitelement (6, 26) in einem endseitigen hinteren Teil (24) des äußeren Abschnitts (21) ein Lichtbündelanteil (L2) ausgekoppelt wird, dessen Lichtstärke unterhalb eines vorgegebenen zweiten Schwellwertes (S2) liegt, und dass das Auskoppelmittel als Licht streuende Auskoppelelemente ausgebildet ist, die auf der Vorderseite (16) und/oder der Rückseite (17) des flächigen Lichtleitelementes (6, 26) angeordnet sind, wobei die Anzahl und/oder die Größe der Auskoppelelemente ausgehend von der Lichteinkoppelfläche (14) in dem inneren Abschnitt (20) des Lichtleitelementes (6, 26) in Richtung des äußeren Abschnitts (21) desselben zunimmt und wobei die Anzahl und/oder Größe der Auskoppelelemente in dem äußeren Abschnitt (21) des Lichtleitelementes (6, 26) konstant ist oder abnimmt.

2. Signalleuchte nach Anspruch 1, **dadurch gekennzeichnet, dass** der erste Schwellwert (S1) ein Seitenmarkierungslichtschwellwert ist, der die Mindestlichtstärke des abgestrahlten Lichtbündelanteils (L1) für die Erzeugung einer Seitenmarkierungslichtfunktion in einem vorgegebenen Winkelbereich (W1) bezogen auf eine quer zur Hauptabstrahlrichtung (7) verlaufenden Horizontalachse (H) vorgibt.

3. Signalleuchte nach Anspruch 1 oder 2, **dadurch gekennzeichnet, dass** im Bereich der Vorderseite (16) des flächigen Lichtleitelementes (6, 26) eine rot eingefärbte Abdeckscheibe (8) angeordnet ist, die randseitig an dem Gehäuse (1) befestigt ist, und dass ein Abstand (A) zwischen der Abdeckscheibe (8) und der Vorderseite (16) des Lichtleitelementes (6, 26) in einer horizontalen und/oder vertikalen Erstreckungsebene veränderlich ausgebildet ist.

4. Signalleuchte nach einem der Ansprüche 1 bis 3, **dadurch gekennzeichnet, dass** die Abdeckscheibe (8) in dem Seitenbereich (19) der Signalleuchte parallel oder in einem Winkelbereich (W2) zwischen 0° und 15° bezogen auf eine in Hauptabstrahlrichtung (7) orientierte Vertikalebene (V) verläuft.

5. Signalleuchte nach einem der Ansprüche 1 bis 4, **dadurch gekennzeichnet, dass** der zweite Schwellwert (S2) ein maximaler Lichtstärkewert ist, der die Lichtstärke des zur Fahrzeugvorderseite hin emittierten Lichtbündelanteils (L2) vorgibt, wobei derselbe Lichtbündelanteil (L2) unter einem vorgegebenen Winkelbereich bezogen auf die quer zur Hauptabstrahlrichtung (7) verlaufende Horizontalachse (H) abgestrahlt wird.

6. Signalleuchte nach einem der Ansprüche 1 bis 5, **dadurch gekennzeichnet, dass** der erste Schwellwert (S1) 0,6 cd und der zweite Schwellwert (S2) 0,25 cd beträgt.

7. Signalleuchte nach einem der Ansprüche 1 bis 6, **dadurch gekennzeichnet, dass** die Auskoppelelemente als Bedruckungsflächen oder als kugelförmige oder prismenförmige Buchtungen ausgebildet sind.

8. Signalleuchte nach einem der Ansprüche 1 bis 7, **dadurch gekennzeichnet, dass** das Auskoppelmittel durch eine Wandstärkeveränderung des Lichtleitelementes (26) gebildet ist, wobei das Lichtleitelement (26) ausgehend von der Lichteinkoppelfläche (14) eine kontinuierlich verringerte Wandstärke (27) aufweist.

9. Signalleuchte nach einem der Ansprüche 1 bis 8, **dadurch gekennzeichnet, dass** die erste Lichteinheit (2') mindestens einen Reflektor (3, 5) und eine Anzahl von auf einer vertikalen Leiterplatte (9, 12) angeordneten Leuchtdioden (9', 12') aufweist, wobei die optische Achse der Reflektoren (3, 5) in Hauptabstrahlrichtung (7), und dass die erste Lichteinheit (2') in dem Vorderbereich (18) in Hauptabstrahlrichtung (7) hinter dem flächigen Lichtleitelement (6, 26) und/oder in dem Seitenbereich (19) in Hauptabstrahlrichtung (7) neben dem Lichtleitelement (6, 26) angeordnet ist.

10. Signalleuchte nach einem der Ansprüche 1 bis 9, **dadurch gekennzeichnet, dass** das flächige Lichtleitelement (6, 26) im Horizontalschnitt bogenförmig ausgebildet ist.

## Claims

1. A signal light for motor vehicles, having a housing (1), in which at least
a first lighting unit and a second lighting unit arranged in the main
emission direction (7) before the same are provided, wherein the
second lighting unit is configured as a flat light guiding element (6, 26)
which covers the first lighting unit,
the flat light guiding element has a back side (17) assigned to the first lighting unit,
a front side (16) facing away from the first lighting unit and a narrow side (14) connecting the
back side to the front side, to which,
as a light coupling-in surface, at least one light-emitting diode as a light source is assigned, in order to couple the light into the flat light guiding element, and the flat light guiding element is configured in such a way that a light bundle of predefined luminous intensity distribution is emitted through the front side, **characterised in that** the flat light guiding element (6, 26) has an inner section (20) extending in a front region (18) of the signal light and has an outer section (21) extending in a side region (19) of the signal light, wherein a contour of the signal light runs substantially parallel to the main emission direction (7) in the side region (19), and decoupling means are assigned to the flat light guiding element in such a way that a light bundle portion (L1) is decoupled from the flat light guiding element (6, 26) in a part of the inner section (20) and/or a part of the outer section (21) of the light guiding element (6, 26) facing the same, the luminous intensity of which light bundle portion lies above a predefined first threshold value (S1), and a light bundle portion (L2) is decoupled from the flat light guiding element (6, 26) in an end-side rear part (24) of the outer section (21), the luminous intensity of which light bundle portion lies below a predefined second threshold value (S2), and the decoupling means are configured as light dispersing decoupling elements which are arranged on the front side (16) and/or the back side (17) of the flat light guiding element (6, 26), wherein the number and/or the size of the decoupling elements increase(s), starting from the light coupling-in surface (14) in the inner section (20) of the light guiding element (6, 26) in the direction of the outer section (21) of the same, and wherein
the number and/or size of the decoupling elements is/are constant or decrease(s) in the outer section (21) of the light guiding element (6, 26).

2. The signal light according to Claim 1, **characterised in that** the first threshold value (S1) is a side marking light threshold value, which predefines the minimum luminous intensity of the emitted light bundle portion (L1) for the production of a side marking light function in a predefined angular range (W1) with respect to a horizontal axis (H) running transversely to the main emission direction (7).

3. The signal light according to Claim 1 or 2, **characterised in that** a red coloured cover disk (8) is arranged in the region of the front side (16) of the flat light guiding element (6, 26), which cover disk is fixed on the edge side to the housing (1), and a distance (A) between the cover disk (8) and the front side (16) of the light guiding element (6, 26) is configured in a changeable manner in a horizontal and/or vertical extension plane.

4. The signal light according to any one of Claims 1 to 3, **characterised in that** the cover disk (8) in the side region (19) of the signal light runs parallel or in an angular range (W2) between 0° and 15° with respect to a vertical plane (V) oriented in the main emission direction (7).

5. The signal light according to any one of Claims 1 to 4, **characterised in that** the second threshold value (S2) is a maximum luminous intensity value, which predefines the luminous intensity of the light bundle portion (L2) emitted towards the front side of the vehicle, wherein the same light bundle portion (L2) is emitted in a predefined angular range with respect to the horizontal axis (H) running transversely to the main emission direction (7).

6. The signal light according to any one of Claims 1 to 5, **characterised in that** the first threshold value (S1) is 0.6 cd and the second threshold value (S2) is 0.25 cd.

7. The signal light according to any one of Claims 1 to 6, **characterised in that** the decoupling elements are configured as printing surfaces or as ball-shaped or prism-shaped indentations.

8. The signal light according to any one of Claims 1 to 7, **characterised in that** the decoupling means are formed by a change in the wall thickness of the light guiding element (26), wherein the light guiding element (26) has a continually reduced wall thickness (27), starting from the light coupling-in surface (14).

9. The signal light according to any one of Claims 1 to 8, **characterised in that** the first lighting unit (2') has at least one reflector (3, 5) and a number of light-emitting diodes (9', 12') arranged on a vertical printed circuit board (9, 12), wherein the optical axis of the reflectors (3, 5) is arranged in the main emission direction (7), and the first lighting unit (2') is arranged in the front region (18) in the main emission direction (7) behind the flat light guiding element (6, 26) and/or is arranged in the side region (19) in the main emission direction (7) next to the light guiding element (6, 26).

10. The signal light according to any one of Claims 1 to 9, **characterised in that** the flat light guiding element (6, 26) has an arc-shaped configuration in the horizontal section.

## Revendications

1. Feu de signalisation pour véhicules, avec un boîtier (1), dans lequel sont prévues au moins une première unité d'éclairage et une deuxième unité d'éclairage, qui est disposée en amont de celle-ci, dans la principale direction de rayonnement (7), sachant que la deuxième unité d'éclairage est réalisée sous la forme d'un élément conducteur de lumière plat (6, 26), qui recouvre la première unité d'éclairage, que l'élément conducteur de lumière plat présente une face arrière (17), qui est associée à la première unité d'éclairage, une face avant (16), qui est opposée à la première unité d'éclairage, et un côté étroit (14), reliant la face arrière à la face avant, auquel, en tant que surface de couplage de lumière, est associée au moins une diode électroluminescente en tant que source de lumière, afin de coupler la lumière dans l'élément conducteur de lumière plat, et que l'élément conducteur de lumière plat est conçu de telle manière que, par le biais de la face avant, un faisceau lumineux, à diffusion d'intensité lumineuse prédéterminée, est rayonné,
**caractérisé en ce que**
l'élément conducteur de lumière plat (6, 26) présente une section intérieure (20), qui s'étend dans une zone avant (18) du feu de signalisation, et est doté d'une section extérieure (21), qui s'étend dans une zone latérale (19) du feu de signalisation, sachant que, dans la zone latérale (19), un contour du feu de signalisation s'étend essentiellement parallèlement par rapport à la principale direction de rayonnement (7), et que des moyens de découplage sont associés à l'élément conducteur de lumière plat de manière à ce que, partant de l'élément conducteur de lumière plat (6, 26), dans une partie de la section intérieure (20) et / ou dans une partie de la section extérieure (21) de l'élément conducteur de lumière plat (6, 26), orientée vers celle-ci, soit découplée une partie de faisceau de lumière (L1), dont l'intensité lumineuse est située au-dessus d'une première valeur de seuil prédéterminée (S1), et que, partant de l'élément conducteur de lumière plat (6, 26), dans une partie arrière (24), côté extrémité, de la section extérieure (21), soit découplée une partie de faisceau de lumière (L2), dont l'intensité lumineuse est située au-dessous d'une deuxième valeur de seuil prédéterminée (S2), et que les moyens de découplage sont réalisés en tant qu'éléments de découplage, qui, diffusant la lumière, sont disposés sur la face avant (16) et / ou sur la face arrière (17) de l'élément conducteur de lumière plat (6, 26), sachant que le nombre et / ou la grandeur des éléments de découplage augmente à partir de la surface de couplage de lumière (14), dans la section intérieure (20) de l'élément conducteur de lumière plat (6, 26), dans la direction de la section extérieure (21) de celui-ci, et sachant que le nombre et / ou la grandeur des éléments de découplage, est constant ou diminue à partir dans la section extérieure (21) de l'élément conducteur de lumière plat (6, 26).

2. Feu de signalisation selon la revendication 1, **caractérisé en ce que** la première valeur de seuil (S1) est une valeur de seuil d'éclairage de marquage latéral, qui définit l'intensité lumineuse minimum de la partie de faisceau de lumière rayonné (L1) pour générer une fonction d'éclairage de marquage latéral dans une zone angulaire (W1) prédéterminée, en référence à un axe horizontal (H), qui s'étend transversalement par rapport à la principale direction de rayonnement (7).

3. Feu de signalisation selon la revendication 1 ou 2, **caractérisé en ce que**, dans le secteur de la face avant (16) de l'élément conducteur de lumière plat (6, 26), est disposé une plaque de verre de recouvrement (8) teint en rouge, qui est fixé au boîtier (1), côté bord, et qu'un intervalle (A), modifiable sur un plan de projection horizontal et / ou vertical, est formé entre la plaque de verre de recouvrement (8) et la face avant (16) de l'élément conducteur de lumière (6, 26).

4. Feu de signalisation selon l'une des revendications 1 à 3; **caractérisé en ce que** la plaque de verre de recouvrement (8) s'étend dans la zone latérale (19) du feu de signalisation, parallèlement ou, dans une zone angulaire (W2), sous un angle situé entre 0 ° et 15 ° en référence à un plan vertical (V), qui est orienté dans la principale direction de rayonnement (7).

5. Feu de signalisation selon l'une des revendications 1 à 4, **caractérisé en ce que** la deuxième valeur de seuil (S2) est une valeur d'intensité lumineuse maximum, qui définit l'intensité lumineuse de la partie de faisceau de lumière (L2) démis vers la face avant du véhicule, sachant que cette même partie de faisceau de lumière (L2) est rayonné dans une zone angulaire prédéterminée en référence à l'axe horizontal (H) qui s'étend transversalement par rapport à la principale direction de rayonnement (7).

6. Feu de signalisation selon l'une des revendications 1 à 5, **caractérisé en ce que** la première valeur de seuil (S1) est située à 0,6 cd et la deuxième valeur de seuil (S2) est située à 0,25 cd.

7. Feu de signalisation selon l'une des revendications 1 à 6, **caractérisé en ce que** die les éléments de découplage sont réalisés sous la forme de surfaces imprimables ou en tant que structures en forme de boules ou de prismes.

8. Feu de signalisation selon l'une des revendications 1 à 7, **caractérisé en ce que** le moyen de découplage est réalisé par une modification de l'épaisseur de la paroi de l'élément conducteur de lumière (26), sachant que l'élément conducteur de lumière (26) présente une épaisseur de paroi (27) qui diminue continuellement à partir de la surface de couplage de lumière (14).

9. Feu de signalisation selon l'une des revendications 1 à 8, **caractérisé en ce que** la première unité d'éclairage (2') présente au moins un réflecteur (3, 5) et un nombre de diodes électroluminescentes (9', 12'), qi sont disposées sur une plaques de circuits (9, 12) verticale, sachant que l'axe optique des réflecteurs (3, 5) est disposé dans la principale direction de rayonnement (7), et que die première unité d'éclairage (2') est disposée dans la zone avant (18), dans la principale direction de rayonnement (7), derrière l'élément conducteur de lumière plat (6, 26) et / ou dans la zone latérale (19), dans la principale direction de rayonnement(7), à côté de l'élément conducteur de lumière (6, 26).

10. Feu de signalisation selon l'une des revendications 1 à 9, **caractérisé en ce que** l'élément conducteur de lumière plat (6, 26) en coupe horizontale présente la forme d'un arc.
